# FASCICULE DE BREVET EUROPEEN

(11) **EP 3 321 146 B1**
(45) Date de publication et mention de la délivrance du brevet: **20.05.2020**
(21) Numéro de dépôt: 17201628.9
(22) Date de dépôt: 14.11.2017
(51) Int. Cl.: B61F 1/00, F16B 7/18

(54) **DISPOSITIF DE FIXATION D'UN ÉLÉMENT À UN VÉHICULE FERROVIAIRE**
VORRICHTUNG FÜR DIE BEFESTIGUNG EINES ELEMENTS AN EINEM SCHIENENFAHRZEUG
A DEVICE FOR FIXING AN ELEMENT TO A RAILWAY VEHICLE

(30) Priorité: 15.11.2016 FR 1661032
(43) Date de publication de la demande: 16.05.2018
(73) Titulaire: ALSTOM Transport Technologies, 93400 Saint-Ouen (FR)
(72) Inventeur: ROLL, Stéphane, 67170 Brumath (FR)
(74) Mandataire: Lavoix

(56) Documents cités:
- EP-A2- 2 612 788
- DE-A1-102004 020 626
- DE-U1-202011 106 764
- JP-A- 2005 140 167
- JP-U- H0 535 535

## Description

La présente invention concerne un dispositif de fixation d'un élément à un véhicule ferroviaire.

Par exemple, l'élément est un équipement pouvant peser jusqu'à plusieurs tonnes, situé préférentiellement en extérieur sous châssis ou en toiture du véhicule ferroviaire.

Un dispositif de fixation est notamment connu d'après DE 10 2004 020626.

Un autre dispositif de fixation d'un élément à un véhicule ferroviaire est connu d'après JP H05 35535 U.

On connait également, dans l'état de la technique, un dispositif de fixation comprenant un rail solidaire du sous-châssis, ce rail comprenant une gorge longitudinale centrale, délimitée par deux rebords intérieurs agencés l'un en regard de l'autre, et des moyens de vissage de l'élément dans la gorge longitudinale centrale.

L'invention a notamment pour but d'améliorer la sécurité d'un tel dispositif de fixation, notamment en cas de défaillance de la liaison principale.

En effet, il convient de s'assurer que l'élément fixé ne se détache pas du véhicule, en cas de défaillance des éléments de fixation, par exemple, due à un défaut de serrage ou à des caractéristiques mécaniques.

A cet effet, l'invention a notamment pour objet un dispositif de fixation d'un élément à un véhicule ferroviaire, plus particulièrement à un sous-châssis du véhicule ferroviaire, comprenant :
- un rail destiné à être solidarisé au véhicule ferroviaire, comprenant une gorge longitudinale centrale délimitée par deux rebords intérieurs agencés l'un en regard de l'autre, et
- des moyens de vissage de l'élément dans la gorge longitudinale centrale, caractérisé en ce que :
- le rail comporte deux rebords extérieurs, s'étendant chacun à l'opposé d'un rebord intérieur respectif, et
- le dispositif de fixation comporte au moins un organe de fixation en forme générale de C, comprenant :
   - une paroi centrale inférieure, destinée à s'étendre parallèlement au rail en délimitant avec ce rail un espace de logement pour au moins une partie de l'élément,
   - deux parois latérales s'étendant verticalement de part et d'autre de la paroi centrale, chaque paroi latérale comportant un rebord de fixation destiné à coopérer avec l'un respectif des rebords extérieurs du rail.

L'organe de fixation permet d'empêcher une chute de l'élément en cas de défaillance des éléments de fixation.

Un dispositif de fixation selon l'invention peut comporter en outre l'une ou plusieurs des caractéristiques suivantes, prises seules ou selon toutes combinaisons techniquement envisageables.
- Les moyens de vissage comportent au moins un ensemble d'une vis et d'un écrou, dont la vis comporte une tête de vis et une tige, la tige étant destinée à traverser l'élément, l'un parmi la tête de vis et l'écrou coopérant avec l'élément et l'autre parmi la tête de vis et l'écrou coopérant avec les rebords intérieurs.
- Au moins l'une des parois latérales comporte une ouverture taraudée de passage d'une vis de serrage.
- L'ouverture taraudée est ménagée en regard du rebord extérieur correspondant du rail.
- La paroi centrale inférieure présente une épaisseur comprise entre 5 et 15 mm, de préférence sensiblement égale à 10 mm.
- L'organe de fixation est réalisé en acier.

L'invention concerne également un procédé de montage d'un dispositif de fixation tel que défini précédemment, comportant :
- une étape préalable de solidarisation du rail avec le véhicule ferroviaire, plus particulièrement au sous-châssis,
- une étape de vissage de l'élément dans la gorge, par les moyens de vissage,
- une étape d'insertion de l'organe de fixation à une extrémité du rail,
- une étape de coulissement de cet organe de fixation le long de ce rail, jusqu'à ce que l'organe de fixation se trouve en regard de l'élément dans une direction verticale.

De manière optionnelle, dans le cas d'un dispositif de fixation dans lequel au moins l'une des parois latérales comporte une ouverture taraudée de passage d'une vis de serrage, le procédé de montage comporte une étape de vissage de la ou les vis de serrage, pour le verrouillage en position de l'organe de fixation.

L'invention sera mieux comprise à la lecture de la description qui va suivre, donnée uniquement à titre d'exemple et faite en se référant aux figures annexées, parmi lesquelles :
- la figure 1 est une vue en perspective d'un dispositif de fixation selon un exemple de mode de réalisation de l'invention ;
- la figure 2 est une vue en coupe dans un plan II-II du dispositif de fixation de la figure 1.

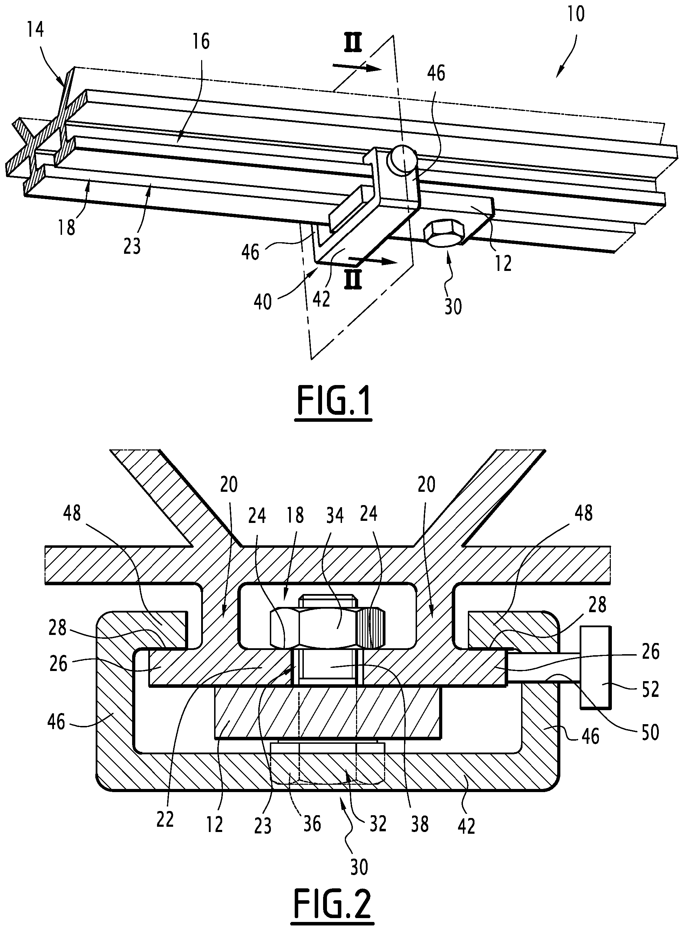

On a représenté, sur la figure 1, un dispositif 10 de fixation d'un élément 12 à un véhicule ferroviaire, plus particulièrement ici à un sous-châssis 14 du véhicule ferroviaire.

L'élément 12 est par exemple un boîtier de composants électroniques. En variante, l'élément 12 peut être formé par tout élément susceptible d'être agencé sur le véhicule ferroviaire, en particulier en sous-châssis ou en toiture.

Le dispositif de fixation 10 comporte un rail 16 solidaire du sous-châssis 14. Par exemple, le rail 16 est venu de matière avec le sous-châssis 14, ou en variante est rapporté sur ce sous-châssis 14 et assemblé par des moyens d'assemblage classiques.

Le rail est, par exemple, réalisé en alliage d'aluminium ou en acier.

Le rail 16 présente une gorge longitudinale centrale 18. Comme cela est notamment représenté sur la figure 2, la gorge longitudinale centrale 18 est délimitée par deux montants 20, et deux rebords intérieurs 22, chacun porté par l'un respectif des montants 20, agencés l'un en regard de l'autre. Plus particulièrement, chaque rebord intérieur 22 s'étend depuis le montant 20 correspondant en direction de l'autre rebord intérieur 22, en laissant une ouverture 23 entre ces rebords intérieurs 22.

Ainsi, chaque rebord intérieur 22 forme un épaulement intérieur 24 respectif s'étendant dans la gorge 18 entre le montant 20 et l'ouverture 23.

Le rail 16 comporte par ailleurs deux rebords extérieurs 26, chacun porté par un montant 20 respectif, et s'étendant chacun à l'opposé du rebord intérieur 24 porté par ce montant 20. Ainsi, chaque rebord extérieur 26 s'étend depuis le montant 20 correspondant en s'éloignant de l'ouverture 23.

Chaque rebord extérieur 26 forme un épaulement extérieur 28 s'étendant depuis le montant 20 vers l'extérieur du rail 16.

Le dispositif de fixation 10 comporte des moyens 30 de vissage de l'élément 12 dans la gorge longitudinale centrale 18.

Les moyens de vissage 30 comportent au moins un ensemble d'une vis 32 et d'un écrou 34, dont la vis 32 comporte une tête 36 et une tige 38.

La tige 38 est destinée à traverser l'élément 12, à travers un passage classiquement prévu à cet effet dans cet élément 12.

L'un parmi la tête de vis 36 et l'écrou 34 coopère avec l'élément 12, autour d'un bord du passage de vis, et l'autre parmi la tête de vis 36 et l'écrou 34 coopère avec les rebords intérieurs 22, et plus particulièrement repose sur les épaulements intérieurs 24.

Dans l'exemple décrit, la tête de vis 36 coopère avec l'élément 12, et l'écrou 34 coopère avec les épaulements intérieurs 24.

Ainsi, l'élément 12 est enserré entre la tête de vis 36 et les rebords intérieurs 22, et les rebords intérieurs 22 sont enserrés entre l'écrou 34 et l'élément 12.

Afin de sécuriser la fixation de l'élément 12, le dispositif de fixation comporte au moins un organe 40 de fixation, en forme générale de C.

Cet organe de fixation 40 comporte une paroi centrale inférieure 42, destinée à s'étendre parallèlement au rail 16 en délimitant avec ce rail 16, et plus particulièrement avec les rebords intérieurs 22, un espace 44 de logement pour au moins une partie de l'élément 12.

L'organe de fixation 40 comporte par ailleurs deux parois latérales 46 s'étendant verticalement de part et d'autre de la paroi centrale 42. Chaque paroi latérale 46 s'étend ainsi verticalement entre une extrémité inférieure liée à la paroi centrale 42 et une extrémité supérieure de fixation au rail 16.

Les parois latérales 46 délimitent transversalement l'espace 44.

Chaque paroi latérale 46 comporte, à son extrémité supérieure de fixation, un rebord de fixation 48 destiné à coopérer avec l'un respectif des rebords extérieurs 26 du rail 16, et plus particulièrement à reposer sur l'épaulement extérieur 28 correspondant.

Les dimensions des rebords de fixation 48 et la distance entre les parois latérales 46 sont choisies pour qu'un déplacement transversal de l'organe de fixation 40 ne permette pas de déboiter l'organe de fixation 40 du rail 16.

En revanche, l'organe de fixation 40 est susceptible de coulisser le long du rail 16. Il est ainsi inséré sur ce rail 16 à une extrémité de ce rail 16, puis coulissé jusqu'à une position au droit de la partie de l'élément 12 destinée à être logée dans l'espace 44.

Avantageusement, au moins l'une des parois latérales 46, comporte un système de verrouillage longitudinale de l'organe de fixation 40, par exemple formée par une ouverture taraudée 50 de passage d'une vis de serrage 52.

Cette ouverture taraudée 50 est ménagée en regard du rebord extérieur 26 correspondant du rail 16. Ainsi, la vis de serrage 52 est serrée contre ce rebord extérieur 26, afin d'immobiliser longitudinalement l'organe de fixation 40.

De préférence, les deux parois latérales 46 comportent chacune une telle ouverture taraudée 50 munie d'une vis de serrage 52 respective.

Il apparaît clairement qu'en cas de défaillance des moyens de vissage 30, l'élément 12 est retenu verticalement par l'organe de fixation 40, et ne chute donc pas du sous-châssis 14. L'organe de fixation 40 est également retenu transversalement par les parois latérales 46.

L'organe de fixation 40 est suffisamment robuste pour supporter l'élément 12, tout en présentant un encombrement réduit. A cet effet, la paroi centrale 42 présente avantageusement une épaisseur comprise entre 5 et 15 mm, de préférence sensiblement égale à 10 mm.

De préférence, les parois latérales 46 présentent également chacune une épaisseur comprise entre 5 et 15 mm, de préférence sensiblement égale à 10 mm.

On notera que l'organe de fixation 40 est par exemple réalisé en acier.

La présente invention n'est pas limitée au mode de réalisation précédemment décrit.

Conformément à une autre variante, le dispositif de fixation 10 pourrait comporter plus d'un organe de fixation 40, par exemple deux organes de fixation 40 agencés de part et d'autre de l'élément 12 dans la direction longitudinale du rail 16.

L'élément 12 présente alors avantageusement une partie saillante en regard de la paroi centrale 42 dans la direction longitudinale, venant en butée contre le bord de cette paroi centrale 42 si l'élément 12 se déplace dans cette direction longitudinale, assurant ainsi un maintien longitudinal de l'élément 12 en cas de défaillance des moyens de vissage 30.

Alternativement, le dispositif 10 est prévu pour fixer un élément 12 à la toiture du véhicule ferroviaire. Le dispositif 10 est, par exemple, similaire au mode de réalisation décrit précédemment en inversant les directions haute et basse.

Conformément à une autre variante, le dispositif est inséré dans un rail en aluminium (dans le cas d'une structure de caisse en aluminium), ou dans un rail en acier galeté (dans le cas d'une structure de caisse en acier).

Un procédé de montage du dispositif de fixation 10 va maintenant être décrit.

Le procédé de montage comporte une étape préalable de solidarisation du rail 16 avec le véhicule ferroviaire, par exemple, avec le sous-châssis 14.

Le procédé comporte ensuite une étape de vissage de l'élément 12 dans la gorge 18, par les moyens de vissage 30.

Le procédé comporte ensuite l'insertion de l'organe de fixation 40 à une extrémité du rail 16 ou à un endroit comprenant une interruption locale du rail réalisé par usinage permettant l'insertion, puis le coulissement de cet organe de fixation 40 le long de ce rail 16, jusqu'à ce que l'organe de fixation 40 se trouve en regard de l'élément 12 dans une direction verticale. En d'autres termes, jusqu'à ce que la paroi centrale inférieure 42 soit en dessous de l'élément 12.

Le procédé comporte, par exemple, le vissage de la ou les vis de serrage 52, pour le verrouillage en position de l'organe de fixation 40.

## Revendications

1. Dispositif (10) de fixation d'un élément (12) à un véhicule ferroviaire, plus particulièrement à un sous-châssis (14) du véhicule ferroviaire, comprenant :
- un rail (16) destiné à être solidarisé au véhicule ferroviaire, comprenant une gorge longitudinale centrale (18) délimitée par deux rebords intérieurs (22) agencés l'un en regard de l'autre, et
- des moyens (30) de vissage de l'élément (12) dans la gorge longitudinale centrale (18),
**caractérisé en ce que** :
- le rail (16) comporte deux rebords extérieurs (26), s'étendant chacun à l'opposé d'un rebord intérieur (22) respectif, et
- le dispositif de fixation (10) comporte au moins un organe de fixation (40) en forme générale de C, comprenant :
• une paroi centrale inférieure (42), destinée à s'étendre parallèlement au rail (16) en délimitant avec ce rail (16) un espace (44) de logement pour au moins une partie de l'élément (12),
• deux parois latérales (46) s'étendant verticalement de part et d'autre de la paroi centrale (42), chaque paroi latérale (46) comportant un rebord de fixation (48) destiné à coopérer avec l'un respectif des rebords extérieurs (26) du rail (16).

2. Dispositif de fixation (10) selon la revendication 1, dans lequel les moyens de vissage (30) comportent au moins un ensemble d'une vis (32) et d'un écrou (34), dont la vis (32) comporte une tête de vis (36) et une tige (38), la tige (38) étant destinée à traverser l'élément (12), l'un parmi la tête de vis (36) et l'écrou (34) coopérant avec l'élément (12) et l'autre parmi la tête de vis (36) et l'écrou (34) coopérant avec les rebords intérieurs (22).

3. Dispositif de fixation (10) selon la revendication 1 ou 2, dans lequel au moins l'une des parois latérales (46) comporte une ouverture taraudée (50) de passage d'une vis de serrage (52).

4. Dispositif de fixation (10) selon la revendication 3, dans lequel l'ouverture taraudée (50) est ménagée en regard du rebord extérieur (26) correspondant du rail (16).

5. Dispositif de fixation (10) selon l'une quelconque des revendications précédentes, dans lequel la paroi centrale inférieure (42) présente une épaisseur comprise entre 5 et 15 mm, de préférence sensiblement égale à 10 mm.

6. Dispositif de fixation (10) selon l'une quelconque des revendications précédentes, dans lequel l'organe de fixation (40) est réalisé en acier.

7. Procédé de montage d'un dispositif de fixation (10) selon l'une quelconque des revendications précédentes, comportant :
- une étape préalable de solidarisation du rail (16) avec le véhicule ferroviaire, plus particulièrement au sous-châssis (14),
- une étape de vissage de l'élément (12) dans la gorge (18), par les moyens de vissage (30),
- une étape d'insertion de l'organe de fixation (40) à une extrémité du rail (16),
- une étape de coulissement de cet organe de fixation (40) le long de ce rail (16), jusqu'à ce que l'organe de fixation (40) se trouve en regard de l'élément (12) dans une direction verticale.

8. Procédé de montage selon la revendication 7 d'un dispositif de fixation (10) dans lequel au moins l'une des parois latérales (46) comporte une ouverture taraudée (50) de passage d'une vis de serrage (52), le procédé de montage comportant une étape de vissage de la ou les vis de serrage (52), pour le verrouillage en position de l'organe de fixation (40).

## Patentansprüche

1. Vorrichtung (10) zum Befestigen eines Elementes (12) an einem Schienenfahrzeug, insbesondere an einem Untergestell (14) des Schienenfahrzeugs, umfassend:
- eine Schiene (16), die vorgesehen ist, an dem Schienenfahrzeug befestigt zu werden, und die eine mittlere Längsnut (18) aufweist, die von zwei einander gegenüberstehenden Innenrändern (22) begrenzt ist, und
- Mittel (30) zum Verschrauben des Elementes (12) in der mittleren Längsnut (18),
**dadurch gekennzeichnet**:
- die Schiene (16) zwei Außenränder (26) aufweist, die sich jeweils entgegengesetzt zu einem jeweiligen Innenrand (22) erstrecken, und
- die Befestigungsvorrichtung (10) mindestens ein Befestigungselemente (40) in allgemeiner C-Form aufweist, umfassend:
• eine untere Mittelwand (42), die vorgesehen ist, sich parallel zur Schiene (16) zu erstrecken, wobei sie zusammen mit dieser Schiene (16) einen Aufnahmeraum (44) für mindestens ein Teil des Elementes (12) begrenzt,
• zwei Seitenwände (46), die sich beidseitig der Mittelwand (42) senkrecht erstrecken, wobei jede Seitenwand (46) einen Befestigungsrand (48) aufweist, der vorgesehen ist, mit einem jeweiligen der Außenränder (26) der Schiene (16) zusammenzuarbeiten.

2. Befestigungsvorrichtung (10) nach Anspruch 1, bei der die Mittel (30) zum Verschrauben mindestens eine Schrauben (32) - Mutter (34) Baugruppe aufweisen, deren Schraube (32) einen Schraubenkopf (36) und einen Schaft (38) aufweist, wobei der Schaft (38) vorgesehen ist, das Element (12) zu durchgreifen und eines von Schraubenkopf (36) und Mutter (34) mit dem Element (12) zusammenarbeitet und das andere von Schraubenkopf (36) und Mutter (34) mit den Innenrändern (22) zusammenarbeitet.

3. Befestigungsvorrichtung (10) nach Anspruch 1 oder 2, bei der mindestens eine der Seitenwände (46) eine Gewindeöffnung (50) für den Durchgang einer Feststellschraube (52) aufweist.

4. Befestigungsvorrichtung (10) nach Anspruch 3, bei der die Gewindeöffnung (50) gegenüber einem entsprechenden Außenrand (26) der Schiene (16) eingearbeitet ist.

5. Befestigungsvorrichtung (10) nach einem beliebigen der vorhergehenden Ansprüche, bei der die untere Mittelwand (42) eine Dicke zwischen 5 und 15 mm, vorzugsweise im Wesentlichen gleich 10 mm aufweist.

6. Befestigungsvorrichtung (10) nach einem beliebigen der vorhergehenden Ansprüche, bei der das Befestigungselement (40) aus Stahl hergestellt ist.

7. Verfahren zum Montieren einer Befestigungsvorrichtung (10) nach einem beliebigen der vorhergehenden Ansprüche, aufweisend:
- einen vorausgehenden Schritt des Befestigens der Schiene (16) an dem Schienenfahrzeug, insbesondere an dem Untergestell (14)
- einen Schritt des Verschraubens des Elementes (12) in der Nut (18) durch die Mittel (30) zum Verschrauben,
- einen Schritt des Einsetzens des Befestigungselementes (40) in ein Ende der Schiene (16),
- einen Schritt des Verschiebens dieses Befestigungselementes (40) entlang dieser Schiene (16), bis das Befestigungselemente (40) sich in einer vertikalen Richtung gegenüber dem Element (12) befindet.

8. Verfahren nach Anspruch 7 zum Montieren einer Befestigungsvorrichtung (10), bei dem mindestens eine der Seitenwände (46) eine Gewindeöffnung (50) für den Durchgang einer Feststellschraube (42) aufweist, wobei das Verfahren zum Montieren einen Schritt des Einschraubens der Feststellschraube(n) (52) für die Verriegelung des Befestigungselementes (40) aufweist.

## Claims

1. Device (10) for fixing an element (12) to a railway vehicle, more particularly to an underframe (14) of the railway vehicle, comprising:
- a rail (16) which is to be secured to the railway vehicle, comprising a longitudinal central groove (18) delimited by two inner flanges (22) which are arranged facing one another, and
- means (30) for screwing the element (12) into the longitudinal central groove (18),
**characterised in that**:
- the rail (16) comprises two outer flanges (26), each extending opposite a respective inner flange (22), and
- the fixing device (10) comprises at least one generally C-shaped fixing member (40), comprising:
• a lower central wall (42) which is to extend parallel to the rail (16), delimiting with the rail (16) a space (44) for housing at least a portion of the element (12),
• two side walls (46) extending vertically on either side of the central wall (42), each side wall (46) comprising a fixing flange (48) which is to cooperate with one of the outer flanges (26) of the rail (16).

2. Fixing device (10) according to claim 1, wherein the screwing means (30) comprise at least one assembly of a screw (32) and a nut (34), the screw (32) of which has a screw head (36) and a shank (38), the shank (38) being intended to pass through the element (12), one of the screw head (36) and the nut (34) cooperating with the element (12) and the other of the screw head (36) and the nut (34) cooperating with the inner flanges (22).

3. Fixing device (10) according to claim 1 or 2, wherein at least one of the side walls (46) comprises a threaded opening (50) for the passage of a clamping screw (52).

4. Fixing device (10) according to claim 3, wherein the threaded opening (50) is formed facing the corresponding outer flange (26) of the rail (16).

5. Fixing device (10) according to any one of the preceding claims, wherein the lower central wall (42) has a thickness of between 5 and 15 mm, preferably substantially equal to 10 mm.

6. Fixing device (10) according to any one of the preceding claims, wherein the fixing member (40) is made of steel.

7. Method for mounting a fixing device (10) according to any one of the preceding claims, comprising:
- a preliminary step of attaching the rail (16) to the railway vehicle, more particularly to the subframe (14),
- a step of screwing the element (12) into the groove (18) by means of the screwing means (30),
- a step of inserting the fixing member (40) at one end of the rail (16),
- a step of sliding the fixing member (40) along the rail (16) until the fixing member (40) is opposite the element (12) in a vertical direction.

8. Method according to claim 7 for mounting a fixing device (10), wherein at least one of the side walls (46) has a threaded opening (50) for the passage of a clamping screw (52), the mounting method comprising a step of screwing the clamping screw(s) (52) in order to lock the fixing member (40) in position.
